# EUROPÄISCHE PATENTSCHRIFT

(11) **EP 1 237 706 B1**
(45) Veröffentlichungstag und Bekanntmachung des Hinweises auf die Patenterteilung: **02.07.2003**
(21) Anmeldenummer: 00993391.2
(22) Anmeldetag: 13.12.2000
(51) Int. Cl.: B29C 47/28, B29C 47/08, B29C 47/58

(54) **SPRITZKOPFANORDNUNG UND EXTRUSIONSVORRICHTUNG**
INJECTION HEAD SYSTEM AND EXTRUSION DEVICE
SYSTEME DE TETES D'INJECTION ET DISPOSITIF D'EXTRUSION

(30) Priorität: 14.12.1999 DE 19960294
(43) Veröffentlichungstag der Anmeldung: 11.09.2002
(73) Patentinhaber: CCS Technology, Inc., Wilmington, DE 19803 (US)
(72) Erfinder: SCHNEIDER, Reiner, 96237 Ebersdorf (DE)
(74) Vertreter: Epping Hermann & Fischer
(86) Internationale Anmeldenummer: DE0004434
(87) Internationale Veröffentlichungsnummer: WO01043945

(56) Entgegenhaltungen:
- EP-A- 0 630 572
- EP-A- 0 938 961
- AT-B- 406 466
- CH-A- 587 117
- CH-A- 689 715
- DE-A- 3 243 184
- FR-A- 2 601 619

## Beschreibung

Die Erfindung betrifft eine Spritzkopfanordnung und eine Extrusionsvorrichtung, und insbesondere betrifft die Erfindung eine Spritzkopfanordnung für die Aufnahme von Extrusionswerkzeugen zur Ausbildung der Ummantelung von Leitern oder Faserbündeln bei der Herstellung von Adern für Kabel oder zur Ausbildung der Ummantelung von Kabeln.

Spritzköpfe zur Ausbildung der Ummantelung von Leitern oder Leiterbündeln sind aus dem Stand der Technik bekannt. Beispielsweise zeigt EP-A-0938961 einen derartigen Spritzkopf. Im Betrieb durchläuft eine Ader den Spritzkopf, über eine oder mehrere Ringdüsen wird die Ummantelung ausgebildet. Mit derartigen Spritzköpfen ist es möglich, die Ummantelung eines Leiters oder ganzer Leiterbündel in einem Arbeitsschritt durchzuführen.

Bei dem genannten Stand der Technik stellt sich das Problem, dass bei der Umstellung der Extrusionsvorrichtung von einem Kabeldurchmesser auf einen anderen, der Spritzkopf gewechselt werden muss. Hierfür muß der Betrieb der Vorrichtung unterbrochen werden, der bis dahin verwendete Spritzkopf ausgebaut und ein neuer Spritzkopf eingesetzt werden. Anschließend muss der neu eingesetzte Spritzkopf erst auf die Betriebstemperatur erwärmt werden, damit die Extrusionsmasse, üblicherweise ein thermoplastischer Kunststoff, im fluiden Zustand durch den Spritzkopf gelangen kann. Diese Prozedur ist zeitaufwendig und daher teuer.

Zur Reduzierung der Wechselzeiten werden die Spritzgießköpfe bisher mit Werkzeugen für die neuen Abmessungen des Kabels bestückt und in einem Ofen oder in einer speziellen Heizvorrichtung auf die gewünschte Temperatur aufgeheizt. Der so vorbereitete Spritzkopf kann dann gegen den alten Spritzkopf ausgetauscht werden.

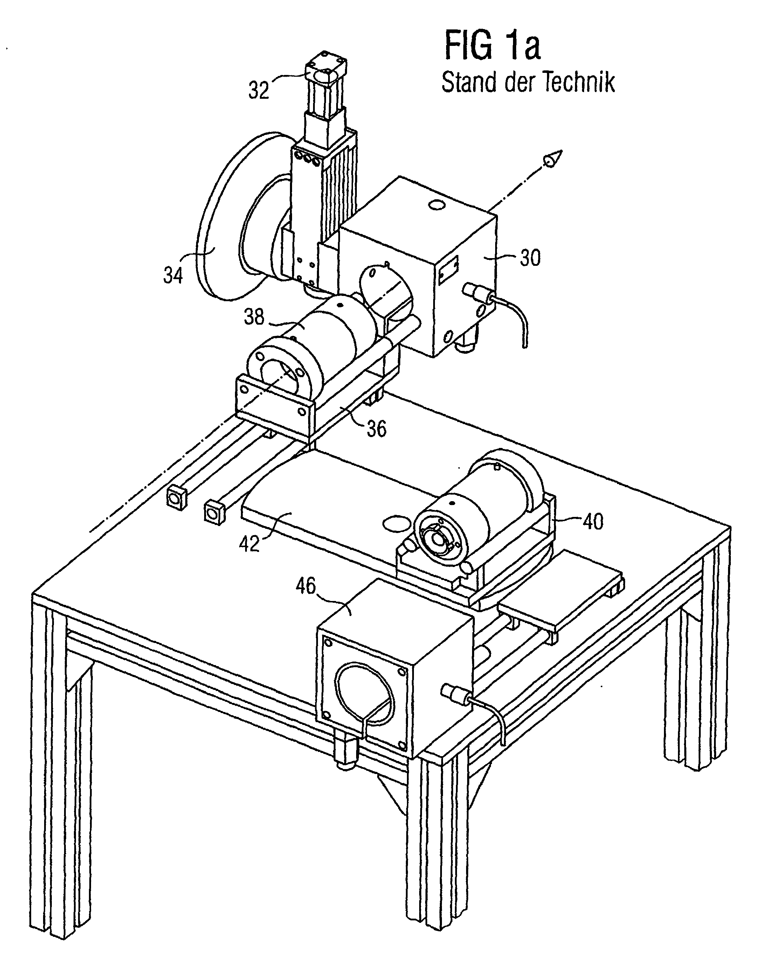

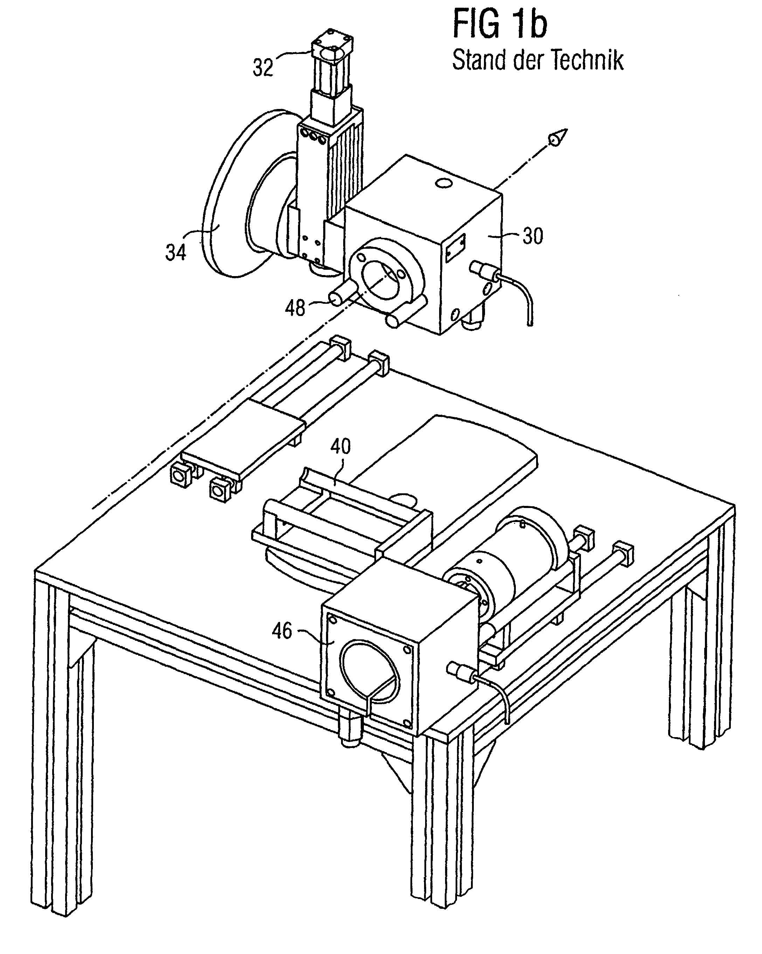

Die Figuren 1A und 1B zeigen eine verbesserte bekannte Extrusionsvorrichtung in einer Arbeitsposition und einer Wechselposition. Diese Extrusionsvorrichtung ist dahingehend verbessert, dass eine Reinigungs- und/oder Vorwärmstation 46, vorgesehen ist. Ein Ersatzspritzkopf wird in dieser Vorwärmstation 46 auf Betriebstemperatur vorgewärmt. Beim Wechsel des Spritzkopfes wird der neue Spritzkopf auf einen Drehtisch 42 geschoben, der an seinem anderen Ende zur Aufnahme des bis dahin verwendeten anderen Spritzkopfes ausgestaltet ist. Über einen Positionswagen 36 wird der bis dahin benutzte Spritzkopf 38 auf den Drehtisch aufgeschoben. Anschließend wird der Drehtisch um 180° gedreht, und der neue Drehkopf kann in den Spritzkopfblock 30 eingesetzt werden. Der Spritzkopfblock 30 ist über einen Anschlußflansch 34 mit einem oder mehreren Extrudern verbunden, über die das Extrusionsfluid oder das Extrudat zugeführt wird. Damit der Extruder während des Spritzkopfwechsels weiterlaufen kann, ist in dem Spritzkopfblock 30 ein Bypass 32 vorgesehen, über den überschüssiges Fluid abgeführt werden kann.

Figur 1B zeigt die gleiche Vorrichtung in einer Arbeitsposition. Während ein Spritzkopf in dem Spritzkoprblock 30 über Positionierungsstifte 48 aufgenommen ist, ist der zweite Spritzkopf in der Reinigungs- und/oder Vorwärmstation 46.

Auch bei diesem Stand der Technik erfordert das Wechseln des Spritzkopfes eine beachtliche Zeit, da der alte Spritzkopf erst aus dem Spritzkopfblock 30 herausgenommen werden muss, dann über den Positionierwagen verfahren und über den Drehtisch durch den neuen Spritzkopf ersetzt werden muss, der dann anschließend mit dem entsprechenden Positionierwagen in den Spritzkopfblock 30 eingesetzt werden muss.

Aufgabe der Erfindung ist es daher, eine Spritzkopfanordnung und Extrusionsvorrichtung zu schaffen, die die oben genannten Nachteile überwinden.

Spritzkopfanordnung nach Anspruch 1 und eine Extrusionsvorrichtung nach Anspruch 10 gelöst. Die abhängigen Ansprüche betreffen weitere vorteilhafte Ausgestaltungen der Erfindung.

Demnach ist eine Spritzkopfanordnung für eine Extrusionsvorrichtung mit einer Zuführung für die Extrusionsmasse, einem Verteilersystem, dem die Extrusionsmasse von der Zuführung zugeführt wird, und einer Spritzkopf-Haltevorrichtung, in der ein Spritzkopf gehalten ist und die von dem Verteilersystem 6 mit Extrusionsmasse versorgt werden kann, dadurch gekennzeichnet ist, dass die Spritzkopf-Haltevorrichtung zur Aufnahme einer Mehrzahl von Spritzköpfen ausgestaltet ist, und dass im Verteilersystem eine Umschaltvorrichtung vorgesehen ist, um den Fluss der Extrusionsmasse zwischen den einzelnen Spritzköpfen selektiv umzuschalten.

Ein Vorteil der Erfindung ist es, dass bei einem Wechsel des Spritzkopfes beziehungsweise des Extrusionswerkzeuges, beispielsweise für eine neue Abmessung eines Kabels, annähernd keine zusätzliche Produktionsunterbrechungszeit verursacht wird.

Dadurch daß mehrere Spritzköpfe gleichzeitig auf einer Haltevorrichtung gehalten sind, können sie bequem mit einer geeigneten Heizvorrichtung auf die gewünschte Betriebstemperatur gebracht werden, so dass ein Wechsel zwischen den Spritzköpfen schnell und problemlos möglich ist. Die Spritzkopfanordnung bildet ein Doppelkopfgehäuse.

Nach einer bevorzugten Ausführungsform der Erfindung weist das Verteilersystem einen Hohldorn auf, wobei die Extrusionsmasse über den Hohldorn der Spritzkopf-Haltevorrichtung zuführbar ist. Durch die Ausbildung des Verteilersystems in Form eines Hohldorns mit einem oder mehreren Fluidwegen ist es möglich, durch einfaches Drehen der Spritzkopf-Haltevorrichtung um den Hohldorn herum, in der Spritzkopf-Haltevorrichtung ausgebildete Fließkanäle mit den Extrusionswegen in dem Hohldorn so auszurichten, dass der jeweils gewünschte Spitzkopf mit Extrusionsmasse oder Fluiden vorsorgt wird.

Nach einer bevorzugten Ausführungsform der Erfindung weist der Hohldorn an seinem Ende eine verschließbare Öffnung auf, die bei einem Spritzkopfwechsel als Bypass dienen kann, so dass während des Spritzkopfwechsels der Extruder nicht angehalten werden muss.

Nach einer bevorzugten Ausführungsform der Erfindung weist die Spritzkopf-Haltevorrichtung einen oder mehrere Fließkanäle auf, die die Extrusionsmasse vom Verteilersystem zu dem geschalteten Spritzkopf führen können. Auf diese Art ist es möglich, verschiedene Extrusionsmassen getrennt zuzuführen, so dass beispielsweise eine mehrschichtige Kabelummantelung ausgebildet werden kann.

Entsprechend einer weiteren bevorzugten Ausführungsform ist die Spritzkopf-Haltevorrichtung zur Aufnahme von zwei Spritzköpfen ausgestaltet. Dies ermöglicht eine einfache Bauweise und bietet gleichzeitig alle Vorteile eines schnellen Spritzkopfwechsels.

Entsprechend einem weiteren vorteilhaften Aspekt weist die Umschaltvorrichtung eine oder mehrere seitliche Öffnungen in dem Hohldorn auf, und durch Drehbewegung des Hohldorns kann diese Öffnung beziehungsweise können diese Öffnungen mit entsprechenden Öffnungen von Strömungs- oder Fließkanälen ausgerichtet werden, so dass Extrusionsmasse durch die Öffnungen aus dem Hohldorn in die Fließkanäle des Werkzeugs gelangen kann. Durch einfaches Drehen der Haltevorrichtung kann bei dieser Ausgestaltung zwischen den verschiedenen Spritzköpfen umgeschaltet werden.

Nach einer bevorzugten Ausführungsform der Erfindung ist die Spritzkopf-Haltevorrichtung derart ausgestaltet, dass sie eine Heizvorrichtung aufweist, durch die die Spritzköpfe temperiert werden.

Nach einer bevorzugten Ausführungsform der Erfindung ist eine lösbare Aufnahme der Spritzköpfe in der Spritzkopf-Haltevorrichtung möglich. Dies ermöglicht den sich nicht in Betrieb befindenden Spritzkopf auszubauen und zu ersetzen.

Erfindungsgemäß wird darüber hinaus eine Extrusionsvorrichtung mit zumindest einem Extruder und einer erfindungsgemäßen Spritzkopfanordnung bereitgestellt. Die Erfindung ist insbesondere bei der Ausbildung von Ummantelungen für Leiter und Kabel von Vorteil, bei denen über einen Extruder ein thermoplastisches Extrudat dem Spritzkopf zugeführt wird.

Im Folgenden wird die Erfindung detailliert anhand eines Ausführungsbeispiels unter Bezugnahme auf die beiliegenden Zeichnungen beschrieben, in denen zeigt:
- Figur 1A und 1B: eine bekannte Extrusionsvorrichtung;
- Figur 2: einen Schnitt durch eine erfindungsgemäße Extrusionsvorrichtung mit zwei Spritzköpfen; und
- Figur 3: einen Schnitt entlang der Linie II-II aus Figur 1.

Im Folgenden wird eine bevorzugte Ausführungsform der Erfindung anhand einer Extrusionsvorrichtung zur Ausbildung der Ummantelung von Leitern oder Leiterbündeln beschrieben. Bei der Herstellung von Adern für Kabel, insbesondere Hoch- oder Höchstspannungskabel, werden in einem Extrusionsverfahren mit einem Spritzkopf eine oder mehrere ummantelnde Schichten auf den Leiter oder das Leiterbündel aufgebracht.

Von Zeit zu Zeit ist es erforderlich, den verwendeten Spritzkopf zu reinigen, da Rückstände aus beispielsweise angeschmolzenen Extrudatpartikeln im Spritzkopf sich ablagern können, wodurch die Qualität der gebildeten Ummantelung beeinträchtigt wird. Ein anderer Grund für Unterbrechungen bei der Herstellung ist der Austausch des Spritzkopfes durch einen anderen, beispielsweise bei der Umstellung der Produktion auf einen anderen Kabeldurchmesser.

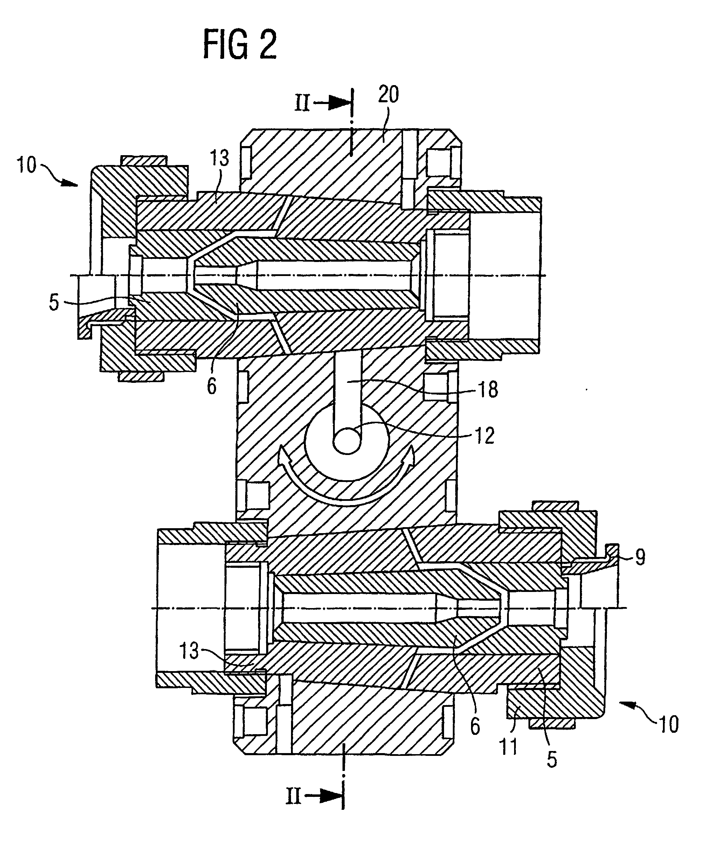

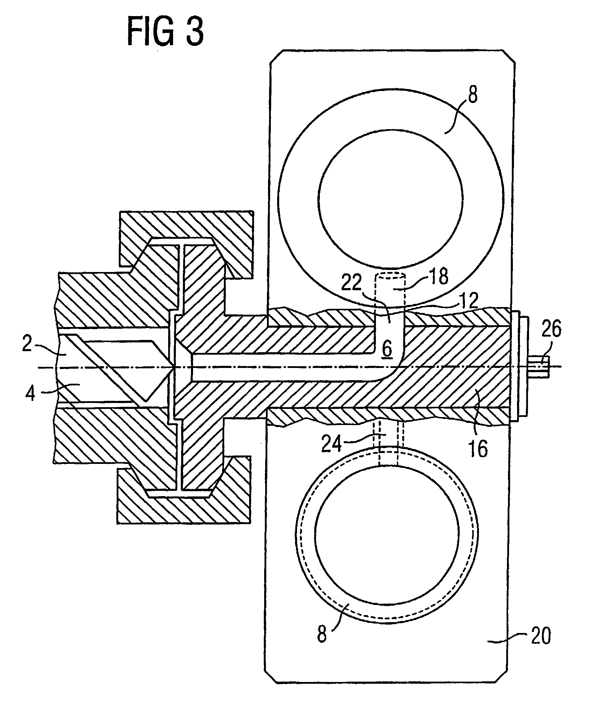

Die notwendigen Produktionsunterbrechungen, die beim Stand der Technik mehrere Stunden in Anspruch nehmen können, sind teuer, da in dieser Zeit nicht produziert werden kann. Um dieses Problem zu überwinden, sieht die Extrusionsvorrichtung der beschriebenen Ausführungsform eine Spritzkopfanordnung vor, wie sie in den Figuren 2 und 3 gezeigt ist. Die gezeigte Spritzkopfanordnung umfaßt eine Zuführung 2 für eine Extrusionsmasse 4, im gezeigten Beispiel das Extrudat für die Ummantelung eines Kabels. Die Zuführung 2 mündet in einem Verteilungssystem 6, dem die Extrusionsmasse 4 zugeführt wird.

Das Verteilungssystem weist einen Hohldorn 16 auf. Durch den in dem Hohldorn gebildeten Kanal wird die Extrusionsmasse transportiert. Drehbar um den Hohldorn gelagert ist eine Spritzkopf-Haltevorrichtung 20 vorgesehen. Die Spritzkopf-Haltevorrichtung der gezeigten Ausführungsform weist zwei Aufnahmeplätze 8 für Spritzköpfe 10 auf. Über Fließkanäle 18, die in der Spritzkopf-Haltevorrichtung 20 ausgebildet sind, kann Extrusionsmasse von dem Verteilersystem an die Spritzkopfaufnahmeplätze geleitet werden.

Genauer gesagt, die Ausführungsform weist eine Umschaltvorrichtung 12 auf, die es ermöglicht, die Extrusionsmasse selektiv einem der beiden Spritzkopfaufnahmeplätze zuzuleiten. Die Umschaltvorrichtung wird durch eine seitliche Öffnung 22 in dem Hohldorn 16 und eine korrespondierende Öffnung 24 in einem Fließkanal 18 der Spritzkopf-Haltevorrichtung gebildet, wobei durch Drehen der Spritzkopf-Haltevorrichtung 20 um den Hohldorn 16 die beiden Öffnungen 22, 24 zueinander ausgerichtet werden, so dass selektiv die Extrusionsmasse 4 aus dem Hohldorn 16 über den Fließkanal 18 zu dem Spritzkopfaufnahmeplatz gelangen kann. Bei der gezeigten Ausführungsform mit zwei Spritzkopfaufnahmeplätzen kann durch Drehen der Spritzkopf-Haltevorrichtung um 180° um den Hohldorn 16 herum zwischen den beiden Spritzkopfaufnahmeplätzen umgeschaltet werden.

Obwohl nicht detaillierter gezeigt, kann entsprechend einer bevorzugten Ausführungsform der Hohldorn 16 einen Bypass 26 aufweisen, durch den überschüssige Extrusionsmasse 4 abgeleitet werden kann. Wenn beispielsweise bei einem Umschalten von einem Spritzkopf-Aufnahmeplatz auf den anderen kurzfristig die Produktion unterbrochen wird, kann der Bypass 26 geöffnet werden, und das in dieser Zeit von dem einen Extruder über die Zuführung 2 und den Hohldorn 16 angelieferte Extrusionsmasse 4, kann abgeführt werden. Auf diese Art kann ein Anhalten des Extruders vermieden werden.

In Figur 2 ist die Spritzkopfanordnung mit zwei eingesetzten Spritzköpfen 10 dargestellt. Zur Erhöhung der Flexibilität des Systems können bei der gezeigten Ausführungsform die beiden Spritzköpfe 10 bei einem Werkzeugwechsel ausgewechselt werden.

Der gezeigte Spritzkopf 10 oder Extrusions-Werkzeug-Einsatz enthält eine Einsatzpatrone oder Hülse 13, ein Mundstück oder Düse 5 zur Ausbildung der gewünschten Ummantelungsform, einen Dorn 6 sowie eine Gewindemutter 11.

Die Figur zeigt zwei mögliche Ausgestaltungen des Spritzkopfs, einmal eine Standardvariante mit einer aufgeschraubten Mutter 11, und eine Variante mit einer zusätzlichen Regulierungsschraube 9. Der Spritzkopf enthält wie üblich ein Kompressionswerkzeug 13 oder ein Halbkompressionswerkzeug oder ein Schlauchwerkzeug. Das Kompressionswerkzeug 13 umfaßt wie in den Figuren 2 und 3 dargestellt Düse 5 und Dorn 6.

Während mit einem der Spritzköpfe 10 extrudiert wird, ist der andere Spritzkopf in einer Ruheposition in der Spritzkopf-Haltevorrichtung 20 eingesetzt. Die Spritzkopf-Haltevorrichtung 20 ist, wie gesagt, auf dem Hohldorn 16 drehbar angeordnet. Über diesen Hohldorn 16 wird die Extrusionsmasse, z. B. thermoplastischer Kunststoff, dem Spritzkopf 10 zugeführt, über den extrudiert wird, der sich sozusagen in der Produktionsposition befindet. Der andere Spritzkopf steht zu dieser Zeit in der Werkzeugwechsel-Position und ist in dieser Position automatisch vom Material des Stroms abgesperrt. Auf diese Art kann ein Wechsel oder Umbau des Spritzkopfs ohne Beeinträchtigung der laufenden Position vorbereitet werden. Zusätzlich ist die Spritzkopf-Haltevorrichtung beheizt. Durch das einheitlich beheizte Doppelkopfgehäuse werden die beiden Werkzeugeinsätze auf die gewünschte, einheitliche Betriebstemperatur gebracht.

Zur Vorbereitung eines Wechsels des Spritzkopfes wird der Spritzkopf 10 in der Werkzeugwechsel-Position auf die Betriebstemperatur aufgeheizt und beim Wechsel in die Produktionsstellung unterbrechungslos auf Betriebstemperatur gehalten. Der Wechsel von der Werkzeugwechsel-Position in die Betriebsposition geschieht durch einfaches Verdrehen der Spritzkopf-Haltevorrichtung 20 um 180° um den Hohldorn 16 und nimmt nur wenige Sekunden in Anspruch.

Über den wahlweise vorgesehenen Bypass 26, der in dem Hohldorn 16 integriert sein kann, kann die Extrusionsmasse 4 abgeleitet werden, während beide Spritzköpfe 10 gegenüber dem Fluidfluss abgesperrt sind. Diese Betriebsart ist vorteilhaft, wenn aus verfahrenstechnischen Gründen der Extruder während des Spritzkopfwechsels und während des Durchfädelns einer neuen Kabelummantelung nicht gestoppt werden soll.

Bei der gezeigten Ausführungsform sind die Spritzköpfe für die Ausbildung der Ummantelung von Leitern und Kabeln vorgesehen. Hierfür wird eine entsprechende Ader durch die Spritzköpfe 10 gefädelt. Bei einem flexiblen Leiter kann dieses Durchfädeln geschehen, bevor der Spritzkopf 10 aus der Werkzeugwechsel-Position in die Produktionsposition gebracht wird. Die Extrusionsmassen sind für die Ummantelung von Leitern geeignete Polymere.

Der Vorteil der erfindungsgemäßen Bauart ist, dass der Spritzkopf- bzw. Werkzeugwechsel nur eine Unterbrechungszeit von wenigen Sekunden verursacht. Der Materialstrom zum Spritzkopf bzw. Werkzeug, der sich in der Werkzeugwechsel-Position befindet, wird automatisch abgesperrt. Darüber hinaus ist die Spritzkopf-Werkzeugheizung schon vor dem Wechsel angeschlossen und wird beim Wechsel nicht unterbrochen. Außerdem muss der Spritzkopf bzw. das Werkzeug beim Wechsel nicht angefasst werden, da es bereits fest montiert ist.

Die gezeigte Ausführungsform zeigt die Zuführung einer einzelnen Extrusionsmasse an Spritzköpfe zur Ausbildung der Ummantelung eines Leiters. Selbstverständlich ist es möglich, mehrere Extrusionsmassen zuzuführen, wobei in diesem Falle mehrere getrennte Zuführkanäle in dem Hohldorn 16 ausgebildet sein müssen, und wobei zusätzlich jeder Spritzkopfaufnahmeplatz in der Spritzkopf-Haltevorrichtung 20 mit den Kanälen im Hohldorn 16 über entsprechende getrennte Fließkanäle 18 verbindbar ist. Spritzköpfe zur gleichzeitigen Ausbildung mehrerer Ummantelungsschichten sind beispielsweise aus der vorgenannten EP-A-938961 bekannt.

Neben der Ausführungsform mit Hohldorn 16 und der darüber gelagerten Spritzkopf-Aufnahmevorrichtung 20 sind auch alternative Ausführungsformen denkbar, bei denen über Ventile ein Umschalten von einem Spritzkopf zum anderen auf der Spritzkopf-Aufnahmevorrichtung 20 der Wechsel des Spritzkopfes 10 erfolgt.

## Patentansprüche

1. Spritzkopfanordnung für eine Extrusionsvorrichtung mit einer Zuführung (2) für Extrusionsmasse (4), einem Verteilersystem (6), dem die Extrusionsmasse (4) von der Zuführung (2) zugeführt wird, und einer Spritzkopf-Haltevorrichtung, in der ein Spritzkopf (10) gehalten ist und die von dem Verteilersystem (6) mit Extrusionsmasse (4) versorgt wird,
**dadurch gekennzeichnet, daß**
die Spritzkopf-Haltevorrichtung ein beheizbares und schwenkbares Gehäuse (20) zur Aufnahme einer Mehrzahl von Spritzköpfen (10) aufweist, wobei die Spritzköpfe in das Gehäuse eingesetzt und vom Gehäuse teilweise umschlossen sind, und dass im Verteilersystem (6) eine Umschaltvorrichtung (12) vorgesehen ist, um den Fluss der Extrusionsmasse (4) zwischen den einzelnen Spritzköpfen (10) selektiv umzuschalten.

2. Spritzkopfanordnung nach Anspruch 1, **dadurch gekennzeichnet, daß**
das Verteilersystem (6) einen Hohldorn (16) aufweist, wobei die Extrusionsmasse (4) über den Hohldorn (16) der Spritzkopf-Haltevorrichtung (20) zuführbar ist.

3. Spritzkopfanordnung nach Anspruch 1 oder 2, **dadurch gekennzeichnet, daß**
das Verteilersystem (6) einen Bypass (26) aufweist, um Extrusionsmasse (4) ohne Durchlaufen eines der Spritzköpfe (10) nach außen abzuführen.

4. Spritzkopfanordnung nach Anspruch 1,2 oder 3,
**dadurch gekennzeichnet, daß**
die Spritzkopf-Haltevorrichtung (20) Fließkanäle (18) aufweist, die die Extrusionsmasse (4) vom Verteilersystem (6) zu dem ausgewählten Spritzkopf (10) führen.

5. Spritzkopfanordnung nach einem der Ansprüche 1 bis 4,
**dadurch gekennzeichnet, daß**
die Spritzkopf-Haltevorrichtung (20) zur Aufnahme von zwei Spritzköpfen (10) ausgestaltet ist.

6. Spritzkopfanordnung nach einem der Ansprüche 1 bis 5,
**dadurch gekennzeichnet, daß**
das Gehäuse (20) drehbar um einen Hohldorn (16) gelagert ist.

7. Spritzkopfanordnung nach einem der Ansprüche 1 bis 6,
**dadurch gekennzeichnet, daß**
die Umschaltvorrichtung (12) eine seitliche Öffnung (22) in einem die Extrusionsmasse zuführenden Hohldorn (16) aufweist, die mit einer korrespondierenden Öffnung (24) eines der Fließkanäle (18) ausgerichtet werden kann, so dass Fließmasse (4) durch die Öffnungen (22, 24) aus dem Hohldorn (16) in den einen der Fließkanäle (18) gelangen kann.

8. Spritzkopfanordnung nach einem der Ansprüche 1 bis 7,
**dadurch gekennzeichnet, daß**
die Spritzkopf-Haltevorrichtung (20) zur lösbaren Aufnahme der Spritzköpfe (10) ausgestaltet ist.

9. Spritzkopfanordnung nach einem der Ansprüche 1 bis 8,
**dadurch gekennzeichnet, daß**
über die Zuführung (2) und das Verteilersystem (6) mittels getrennter Extrusionswege gleichzeitig mehrere verschiedene Fließmassen dem jeweiligen Spritzkopf (10) zugeführt werden.

10. Extrusionsvorrichtung mit mindestens einem Extruder und einer Spritzkopfanordnung nach einem der Ansprüche 1 bis 9.

11. Extrusionsvorrichtung nach Anspruch 10,
**dadurch gekennzeichnet, daß**
die Vorrichtung mehrere Extruder aufweist.

12. Extrusionsvorrichtung nach einem der Ansprüche 10 oder 11,
**dadurch gekennzeichnet, daß**
die Spritzköpfe (10) zur Ausbildung einer Ummantelung eines Leiters, eines Leiterbündels oder einer Kabelseele ausgebildet sind.

## Claims

1. Die-head injector arrangement for an extrusion device with a feed (2) for extrusion compound (4), a manifold system (6), to which the extrusion compound (4) is fed by the feed (2), and a die-head holding device, in which a die injector head (10) is held and which is supplied with extrusion compound (4) by the manifold system (6), **characterized in that** the die-head holding device has a heatable and pivotable housing (20) for receiving a plurality of die injector heads (10), the die injector heads being inserted into the housing and partly enclosed by the housing, and **in that** a switching-over device (12) is provided in the manifold system (6) in order to switch over the flow of the extrusion compound (4) selectively between the individual die injector heads (10).

2. Die-head injector arrangement according to Claim 1, **characterized in that** the manifold system (6) has a hollow pin (16), it being possible for the extrusion compound (4) to be fed to the die-head holding device (20) via the hollow pin (16).

3. Die-head injector arrangement according to Claim 1 or 2, **characterized in that** the manifold system (6) has a bypass (26), in order to discharge extrusion compound (4) to the outside without it passing through one of the die injector heads (10).

4. Die-head injector arrangement according to Claim 1, 2 or 3, **characterized in that** the die-head holding device (20) has flow channels (18), which lead the extrusion compound (4) from the manifold system (6) to the selected die injector head (10).

5. Die-head injector arrangement according to one of Claims 1 to 4, **characterized in that** the die-head holding device (20) is designed for receiving two die injector heads (10).

6. Die-head injector arrangement according to one of Claims 1 to 5, **characterized in that** the housing (20) is mounted rotatably about a hollow pin (16).

7. Die-head injector arrangement according to one of Claims 1 to 6, **characterized in that** the switching-over device (12) has a lateral opening (22) in a hollow pin (16) which feeds the extrusion compound and can be aligned with a corresponding opening (24) of one of the flow channels (18), so that flow compound (4) can pass through the openings (22, 24) out of the hollow pin (16) into the specific one of the flow channels (18).

8. Die-head injector arrangement according to one of Claims 1 to 7, **characterized in that** the die-head holding device (20) is designed for releasably receiving the die injector heads (10).

9. Die-head injector arrangement according to one of Claims 1 to 8, **characterized in that** a number of different flow compounds can be fed simultaneously to the respective die injector head (10) via the feed (2) and the manifold system (6) by means of separate extrusion paths.

10. Extrusion device with at least one extruder and a die-head injector arrangement according to one of Claims 1 to 9.

11. Extrusion device according to Claim 10,
**characterized in that** the device has a number of extruders.

12. Extrusion device according to either of Claims 10 and 11, **characterized in that** the die injector heads (10) are designed for forming a sheathing of a conductor, a bundle of conductors or a cable core.

## Revendications

1. Système de tête d'injection pour un dispositif d'extrusion, comprenant une entrée (2) pour de la masse (4) d'extrusion, un système (6) formant répartiteur auquel la masse (4) d'extrusion peut être apportée par l'entrée (2) et un dispositif de maintien de tête d'extrusion dans lequel une tête (10) d'extrusion est maintenue et qui est alimentée en masse (4) d'extrusion par le système (6) formant répartiteur,
**caractérisé en ce que** le dispositif de maintien de tête d'extrusion a une enveloppe (20), pouvant être chauffée et pouvant basculer, de réception d'une multiplicité de têtes (10) d'injection, les têtes d'injection étant insérées dans l'enveloppe et étant entourées en partie de l'enveloppe et **en ce qu'**il est prévu dans le système (6) formant répartiteur un dispositif (12) de commutation pour commuter sélectivement le flux de la masse (4) extrudée entre les diverses têtes (10) d'injection.

2. Système de tête d'injection suivant la revendication 1, **caractérisé en ce que** le système (6) formant répartiteur a un mandrin (16) creux, la masse (4) d'extrusion pouvant être apportée au dispositif (20) de maintien de tête d'extrusion par le mandrin (16) creux.

3. Système de tête d'injection suivant la revendication 1 ou 2, **caractérisé en ce que** le système (6) formant répartiteur a une dérivation (26) pour évacuer à l'extérieur de la masse (4) d'extrusion sans passer par l'une des têtes (10) d'injection.

4. Système de tête d'injection suivant la revendication 1, 2 ou 3, **caractérisé en ce que** le dispositif (20) de maintien de tête d'injection a des canaux (18) d'écoulement qui font passer la masse (4) d'extrusion du système (6) formant répartiteur à la tête (10) d'injection sélectionnée.

5. Système de tête d'injection suivant l'une des revendications 1 à 4, **caractérisé en ce que** le dispositif (20) de maintien de tête de d'injection est conformé pour recevoir deux têtes (10) d'injection.

6. Système de tête d'injection suivant l'une des revendications 1 à 5, **caractérisé en ce que** le l'enveloppe (20) est montée tournante par rapport à un mandrin (16) creux.

7. Système de tête d'injection suivant l'une des revendications 1 à 6, **caractérisé en ce que** le dispositif (22) de commutation a une ouverture (22) latérale dans un mandrin (16) creux d'apport de la masse d'extrusion, ouverture qui peut être alignée avec une ouverture (24) correspondante de l'un des canaux (18) d'écoulement, de sorte que de la masse (4) en écoulement peut parvenir, en passant par les ouvertures (22, 24) du mandrin (16) creux à l'un des canaux (18) d'écoulement.

8. Système de tête d'injection suivant l'une des revendications 1 à 7, **caractérisé en ce que** le dispositif (20) de maintien de tête d'injection est conformé pour recevoir de manière amovible les têtes (10) d'injection.

9. Système de tête d'injection suivant l'une des revendications 1 à 8, **caractérisé en ce que** par l'entrée (2) et par le système (6) formant répartiteur, on peut envoyer, au moyen de trajets d'extrusion distincts, simultanément plusieurs masses en écoulement différentes à la tête (10) d'injection respective.

10. Dispositif d'extrusion ayant au moins une extrudeuse et un système de tête d'injection suivant l'une des revendications 1 à 9.

11. Dispositif d'extrusion suivant la revendication 10, **caractérisé en ce que** le dispositif comprend plusieurs extrudeuses.

12. Dispositif d'extrusion suivant l'une des revendications 10 ou 11, **caractérisé en ce que** les têtes (10) d'injection sont constituées de manière à former une gaine d'un conducteur, d'un faisceau de conducteurs ou d'une âme de câble.
